# EUROPEAN PATENT SPECIFICATION

(11) **EP 2 329 968 B1**
(45) Date of publication and mention of the grant of the patent: **10.10.2012**
(21) Application number: 10193689.6
(22) Date of filing: 03.12.2010
(51) Int. Cl.: B60G 3/20, B60G 21/02, B60K 17/28

(54) **Front axle assembly for an agricultural tractor**
Vorderachsenzusammensetzung für einen Ackerschlepper
Assemblage d'essieu avant pour un tracteur agricole

(30) Priority: 03.12.2009 NL 2003903
(43) Date of publication of application: 08.06.2011
(73) Proprietor: Zuidberg Techniek Holding B.V., 8307 DE Ens (NL)
(72) Inventor: Zuidberg, Jeroen Emiel, 8011 CH Zwolle (NL)
(74) Representative: van Kooij, Adriaan

(56) References cited:
- EP-A1- 1 600 311
- EP-A1- 1 650 108
- EP-A2- 0 262 862
- EP-A2- 0 807 543
- EP-A2- 0 945 396
- EP-A2- 1 627 762
- GB-A- 2 024 741
- JP-A- 59 014 521
- JP-A- 59 057 031

## Description

The present invention relates to a front axle assembly for an agricultural tractor. Agricultural tractors, also referred to as tractive vehicles or carrying vehicles, are utilized when working farmland for the purpose of carrying and/or pulling agricultural machines, such as mowers, ploughs, harvesting machines etc. Such an agricultural tractor is generally provided with a rolling chassis provided with two wheel axles, a front axle and a rear axle. The rear wheels arranged on the rear axle are generally driven. The pressure on the rear wheels resulting from an agricultural machine being carried or pulled on the rear side of the agricultural tractor here enhances the grip of the rear wheels on the farmland. However, this pressure on the rear wheels can also result in the rear wheels sinking into the ground and becoming stuck therein. In order to prevent the agricultural tractor becoming stuck the rear wheels generally take a large and wide form. The front wheels on the other hand generally take a small and thin form compared to the rear wheels. An agricultural tractor can hereby move over the farmland more effectively. This is because the front wheels then have the least resistance. The rear axle generally comprises a transmission housing which is rigidly connected to the chassis of the agricultural tractor and on opposite sides of which the rear wheels are arranged rigidly, i.e. unsprung. The rear wheels are then connected rigidly to the chassis so that a direct transmission of the driving, carrying and/or pulling forces is possible from the chassis to the rear wheels, and vice versa, and the agricultural tractor can displace great loads over farmland. The front axle generally takes a sprung form or oscillating form, i.e. the front wheels arranged thereon can move relative to the chassis. It is hereby possible to avoid the front wheels losing contact with the ground when for instance one of the rear wheels sinks further into the ground than the other of the rear wheels and thereby tilts the chassis of the agricultural tractor rigidly connected to the rear wheels. Such a situation may also occur on an uneven terrain. Maintaining contact of the front wheels with the ground is for instance important since the front axle generally takes a steerable form, i.e. the front axle enables the front wheels to pivot relative to the chassis so that the agricultural tractor can be steered in a desired direction during movement thereof. If the front axle takes a driven form, so that the agricultural tractor has four-wheel drive, a sprung front axle or oscillating front axle avoids one of the driven wheels losing contact with the ground.

EP-A-1 650 108 shows an agricultural tractor with a front axle assembly with two suspension arm constructions connected to the differential housing.

The front axle assembly according to the invention comprises a differential housing which can be coupled to the chassis of the agricultural tractor, and two suspension arm constructions connected to the differential housing which extend in opposite directions and which can each bear a wheel of the agricultural tractor at an end remote from the differential housing, wherein a differential is arranged in the differential housing which can be operatively coupled to a drive of the agricultural tractor and to wheels of the agricultural tractor to be carried by the suspension arm construction, and the differential housing can hold liquid lubricants for lubricating the differential, wherein the front axle assembly also comprises a power take-off device, comprising an input shaft which can be operatively coupled to a drive of the agricultural tractor, an output shaft which can be coupled to an agricultural machine to be driven by the agricultural tractor, and a power take-off transmission with which a rotation of the input shaft can be transmitted to the output shaft, wherein at least a part of the power take-off transmission is arranged in the differential housing so that the part of the power take-off transmission arranged in the differential housing can be lubricated with the liquid lubricants held in the differential housing.

For the purpose of driving an agricultural machine carried or pulled by an agricultural tractor, an agricultural tractor is generally provided with a power take-off. Such a power take-off is optionally coupled via the transmission of the agricultural tractor to the output shaft of the drive of the agricultural tractor, and can be coupled to the agricultural machine to be driven so that the agricultural machine can be driven by means of the drive of the agricultural tractor. An agricultural tractor as described above is traditionally provided at the rear with a power take-off for driving agricultural machines being carried or pulled at the rear. In order to also carry out a preparatory operation in addition to the main operation with an agricultural machine carried or pulled at the rear of the agricultural tractor, agricultural tractors have also been provided in the course of time with a power take-off on the front side of the agricultural tractor.

GB-A-2 024 741 and EP-A-262 862 show agricultural tractors with a front power take-off.

The front axle assembly according to the invention enables a particularly favourable provision of a power take-off device on the front side of an agricultural tractor with a driven front axle. Because at least a part of the power take-off transmission is arranged in the differential housing, so that the part of the power take-off transmission arranged in the differential housing can be lubricated with the liquid lubricants held in the differential housing, it is possible for the input shaft to be arranged on the one side of the differential housing and the output shaft on the other side of the differential housing, so that the transmission between the drive of the agricultural tractor and the input shaft need not be guided round the front axle assembly. It is also possible that the overall volume of liquid lubricant required for lubricating the differential and the power take-off transmission, as a result of a more efficient cooling of the power take-off transmission through the use of liquid lubricants held in the relatively cold differential housing, can be smaller than would be the case if the power take-off transmission were lubricated with separate liquid lubricants, so that as a result of this invention the overall size of the front axle assembly can be smaller. In the absence of the necessity to guide the transmission between the drive of the agricultural tractor and the input shaft round the front axle assembly and as a result of the smaller overall size on the front side of the agricultural tractor the front axle assembly according to the invention takes up less space. This has the advantage that more space is available on the front side of the agricultural tractor, for instance for the radiator of the drive of the agricultural tractor and for the movement of the front wheels relative to the chassis, such as upward movement of the front wheels relative to the chassis in the case of a sprung front axle and for inward rotation of the front wheels relative to the chassis in the case of a steerable front axle. This advantage is moreover realized without components of the power take-off device being displaced to other parts of the agricultural tractor. This latter is important since a front axle of an agricultural tractor is generally a unit chosen independently of for instance the chassis and the rear shaft by the manufacturer in the assembly of the agricultural tractor.

In a favourable embodiment of the front axle assembly according to the invention the differential and the part of the power take-off transmission arranged in the differential housing are arranged in the same space. Owing to the absence of separate spaces and channels therebetween for the exchange of the liquid lubricant between the spaces, this measure enables an exceptionally compact and simple realization of the front axle assembly according to the invention.

In a further favourable embodiment of the front axle assembly according to the invention a part of the power take-off transmission lying outside the differential housing is arranged in a transmission housing which is in open connection with the differential housing, so that the part of the power take-off transmission arranged in the transmission housing can be lubricated with the liquid lubricants held in the differential housing. This measure makes it possible that a part of the power take-off transmission which cannot be arranged in the differential housing can nevertheless be lubricated with liquid lubricants held in the differential housing, so that a separate volume of liquid lubricants is not necessary for this part of the power take-off transmission. This embodiment can be advantageous when for instance a part of the power take-off transmission must be simple to replace, or if, given the manufacture of the differential housing, it would be too difficult or costly to accommodate a part of the power take-off transmission in the differential housing.

In a favourable embodiment the front axle assembly also comprises a pump for pumping out of the differential housing the liquid lubricants held therein to the part of the power take-off transmission arranged in the transmission housing, wherein passages are provided between the differential housing and the transmission housing through which the liquid lubricants pumped to the transmission housing can flow back to the differential housing. This measure enables a certain and dosed lubrication of the part of the power take-off transmission arranged in the transmission housing.

In a further favourable embodiment of the front axle assembly according to the invention the front axle assembly also comprises bearing members for bearing the agricultural machine to be driven by means of the power take-off device. This measure renders coupling means arranged separately on the chassis unnecessary. In a favourable embodiment hereof the differential housing is provided with at least a part of the bearing members. This measure enables an exceptionally compact embodiment of a front axle assembly according to the invention provided with coupling means.

In a favourable embodiment of the front axle assembly according to the invention with bearing members, the bearing members comprise a lifting device for lifting the agricultural machine to be carried by means of the bearing members. This measure enables lifting of an agricultural machine to be driven.

In a further favourable embodiment of the front axle assembly according to the invention the suspension arm constructions comprise suspension arms connected pivotally to the differential housing so that a pivoting movement of the suspension arms is possible relative to the differential housing, and the front axle assembly is also provided with a spring device for sprung pivoting movement of the suspension arms relative to the differential housing. These measures make it possible for the front axle assembly according to the invention to take a sprung form. In a favourable embodiment hereof the spring device comprises a spring member arranged floating between the two suspension arm constructions. Through the use of a spring member which operates both suspension arm constructions simultaneously instead of a separate spring element for each individual suspension arm construction, this measure enables a simple construction. This measure moreover provides for a simple control of the suspension in that the front axle assembly, as a result of the spring element arranged floating between the suspension arm constructions, adjusts itself to a changed transverse angle of inclination of the chassis relative to the ground. In a further favourable embodiment hereof the differential housing is provided with a passage in which the spring member is received in floating manner. Because the spring element need not be arranged above or below the front axle assembly, this measure enables an exceptionally compact front axle assembly. The spring element is moreover protected from damage thereto since the spring element is enclosed by the differential housing. Alternatively, the spring element can be arranged not floating but pivotally between the two suspension arm constructions.

In a favourable embodiment of the front axle assembly according to the invention with a spring member, the spring member also comprises a damping for damping the pivoting movement of the suspension arms. This measure enables a damping of the pivoting movement of the suspension arms without a separate damping being required for each individual suspension arm construction.

In a further favourable embodiment of the front axle assembly according to the invention with a spring member, the spring member is provided with a length adjustment with which the length of the spring member is adjustable. This measure enables a simply constructed and easily controlled height adjustment of the front axle assembly.

In a further favourable embodiment of the front axle assembly according to the invention the end of the suspension arm construction which is remote from the differential housing and which can bear a wheel of the agricultural tractor is provided with a wheel hub to which the wheel for carrying can be coupled, wherein the wheel hub is connected pivotally to the end of the suspension arm construction remote from the differential housing. This measure makes it possible for the front axle assembly according to the invention to be a steerable front axle.

In a further favourable embodiment of the front axle assembly according to the invention the power take-off transmission comprises a gearing variable under load. This measure makes a speed reduction of the output shaft possible while it is driving an agricultural machine. The front axle assembly according to the invention is particularly suitable for accommodation therein of a gearing variable under load, since in such a gearing a particularly high cooling capacity of the liquid lubricants is required as a result of a system of toothed wheels. Because an exceptionally efficient cooling is possible in the front axle assembly according to the invention as a result of the use of liquid lubricants held in the differential housing, the application of a gearing variable under load in a front axle assembly according to the invention is possible with exceptionally little increase in the size of the front axle assembly.

In a further favourable embodiment of the front axle assembly according to the invention the power take-off transmission comprises a selectively controllable clutch, in particular a wet multi-plate clutch, for selective coupling of the input shaft and the output shaft. In the case of a wet clutch liquid lubricants are used to keep clean and cool the friction surfaces of the clutch parts. When a wet clutch is applied in a front axle assembly according to the invention it is possible for the clutch to make use of the liquid lubricants held in the differential housing, so that an exceptionally compact front axle assembly with selectively controllable clutch can be realized.

The invention also relates to an agricultural tractor provided with an above described front axle according to the invention.

Although the above described configuration of an agricultural tractor having a rear axle with large rear wheels and a front axle with small front wheels is most common, it can also be the case that the above described rear axle is arranged at the front of the agricultural tractor and the above described front axle at the rear. This configuration occurs for instance in agricultural tractors which carry the main load at the front.

The present invention will be further elucidated hereinbelow on the basis of an exemplary embodiment which is shown schematically in the accompanying figures. This is a non-limitative exemplary embodiment.

In the figures:
- figure 1 is a partially cut-away perspective view of an agricultural tractor provided with a front axle assembly according to the invention;
- figure 2 is a perspective view of the front axle assembly of figure 1;
- figure 3 is a partially cut-away perspective view of the front axle assembly of figure 2;
- figure 4 is a cross-sectional side view of the front axle assembly of figure 2;
- figure 5 is a cross-sectional front view of the front axle assembly of figure 2.

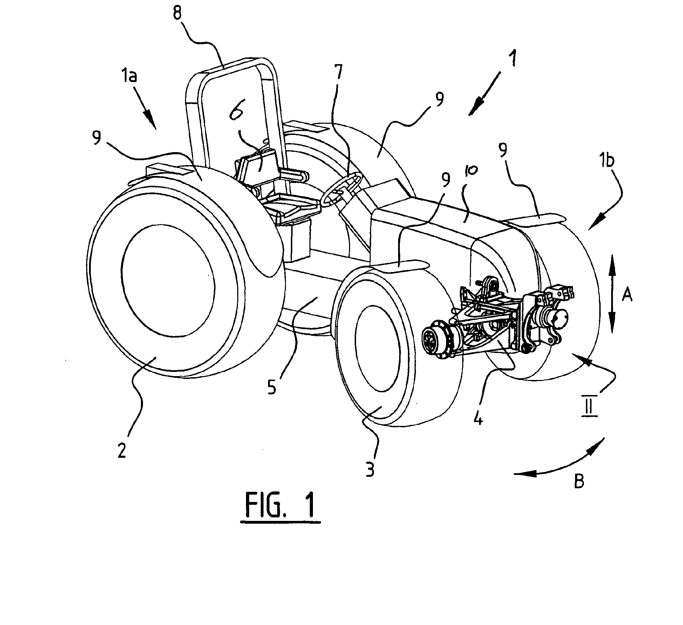

Figure 1 shows an agricultural tractor 1. Agricultural tractor 1 is shown with relatively large rear wheels 2 on rear side 1a and two relatively small front wheels 3 on front side 1b. Rear wheels 2 are arranged on a rear axle (not shown) and front wheels 3 on a front axle assembly 4. Front axle assembly 4 is coupled to chassis 5 and takes a sprung and steerable form, i.e. front wheels 3 can move up-/downward as according to arrows A relative to chassis 5 and the front wheels can rotate inward/outward relative to chassis 5. This latter makes it possible for a driver of the agricultural tractor seated on seat 6 to cause the agricultural tractor to change direction during movement thereof by means of steering wheel 7. Agricultural tractor 1 is further shown with a rollover protection 8, splash guards 9 and a hood 10 under which the drive (not shown) of agricultural tractor 1 is situated, for instance a diesel engine.

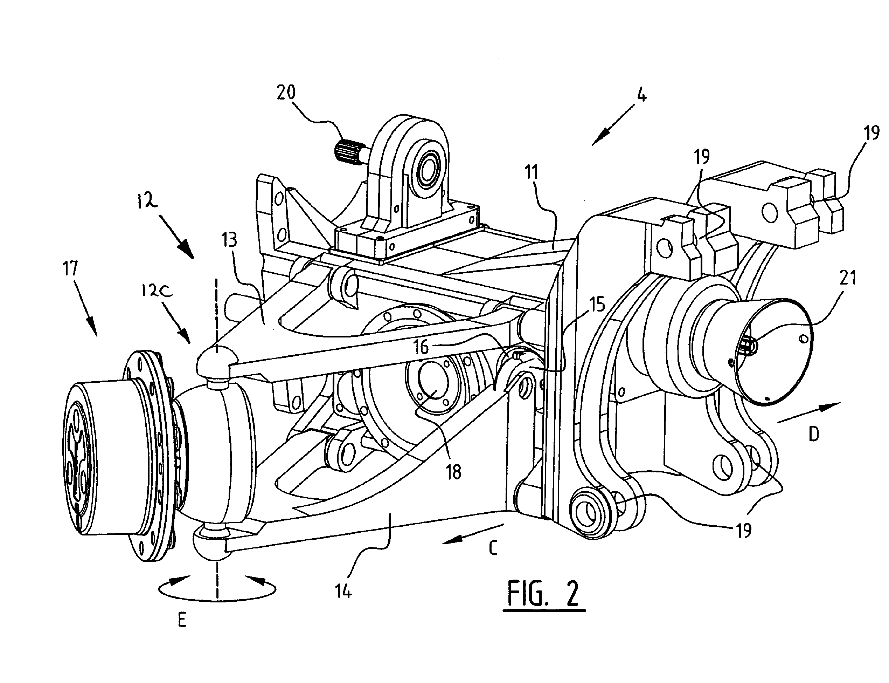

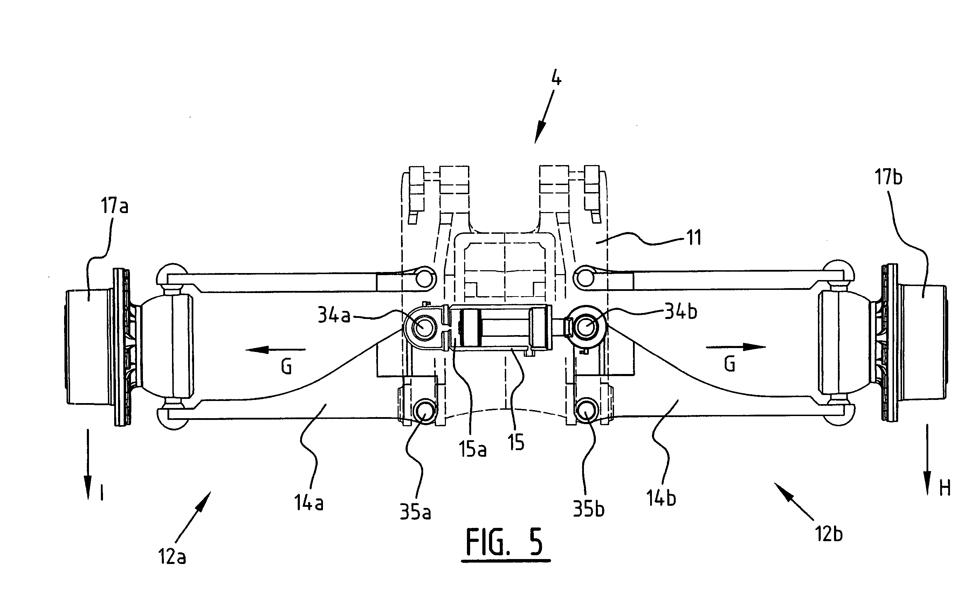

Figure 2 shows front axle assembly 4 of figure 1 in more detail. Front axle assembly 4 is shown with a differential housing 11 which can be coupled to chassis 5 of agricultural tractor 1 as shown in figure 1. As shown, a suspension arm construction 12 is connected to differential housing 11 on the side of differential housing 11 shown in the figure and extends from differential housing 11 in the direction of arrow C. A similar suspension arm construction extends in opposite direction as indicated by arrow D from the side of differential housing 11 that is not shown. Suspension arm construction 12 is shown with two suspension arms 13, 14 connected pivotally to differential housing 11 so that a pivoting movement of suspension arms 13, 14 is possible relative to differential housing 11. Also shown is that lower suspension arm 14 of suspension arm construction 12 is coupled to a spring element 15 which is received in floating manner in a passage 16 of differential housing 11. The function of this spring element is further described in the description of figure 5. Also shown in figure 2 is that the end 12c of suspension arm construction 12 remote from differential housing 11 is provided with a wheel hub 17 to which can be coupled the front wheel 3 of figure 1 to be carried by suspension arm construction 12. Wheel hub 17 is connected rotatably to the end 12a of suspension arm construction 12 remote from differential housing 11 so that wheel hub 17, and thereby the front wheel coupled thereto, can rotate in the direction of arrow E relative to suspension arm construction 11 and steering of agricultural tractor 1 as shown in figure 1 is possible with front wheels 3.

Arranged in differential housing 11 is a differential with which the front wheel 3 coupled to wheel hub 17 as shown in figure 1 can be driven. A drive shaft is then arranged for this purpose between an output differential shaft 18 and wheel hub 17. For the sake of clarity this drive shaft is not shown in figure 2.

Figure 2 further shows that the differential housing is provided with bearing members in the form of bearing lugs 19 to which can be coupled an agricultural machine to be carried on the front side 1b by agricultural tractor 1 of figure 1. A lifting device (not shown) is optionally arranged on the bearing lugs for lifting the agricultural machine to be carried, and in that case bearing lugs 19 form, together with the lifting device, the bearing members. For the purpose of driving an agricultural machine to be carried by front axle assembly 4, front axle assembly 4 as shown in figure 2 is provided with a power take-off device with an input shaft 20, which can be coupled operatively to the drive of agricultural tractor 1, and an output shaft 21 which can be coupled to an agricultural machine to be driven by agricultural tractor 1. A rotation of input shaft 20 can be transmitted to output shaft 21 by means of a power take-off transmission. The power take-off transmission is not shown in figure 2.

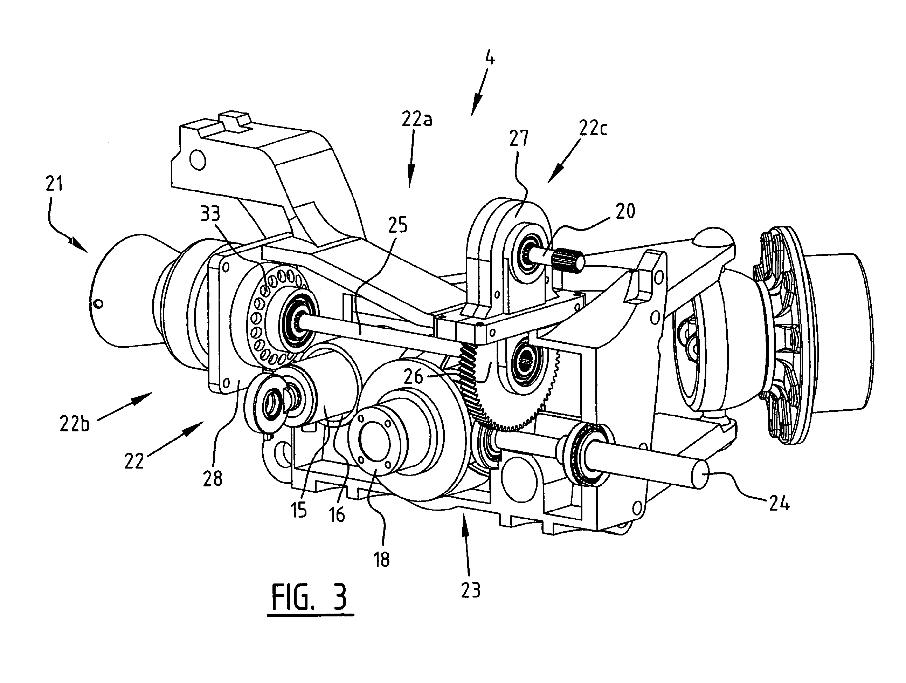

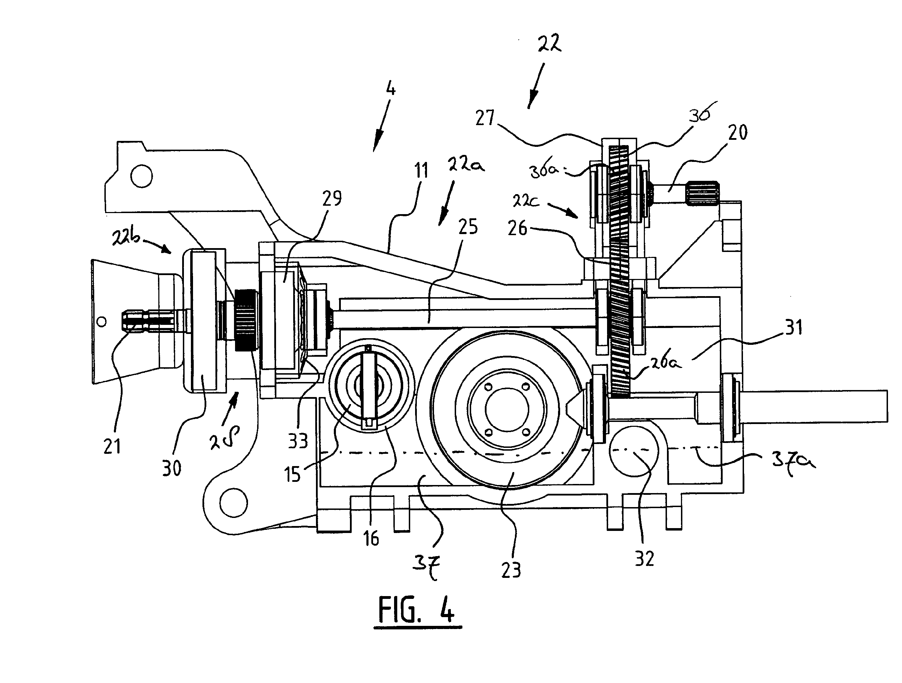

Figure 3 shows a partially cut-away view of front axle assembly 4 of figure 2 so that power take-off transmission 22 and differential 23 can be seen. Differential 23 is operatively coupled by means of the input differential shaft 24 to the drive of agricultural tractor 1 of figure 1 and, as described above, can be coupled operatively to front wheels 3 by means of the output differential shaft 18. A rotation of input shaft 20 can be transmitted to output shaft 21 by means of power take-off transmission 22. As shown, a part 22a of power take-off transmission 22, including transmission shaft 25 and transmission gear 26, is arranged in differential housing 11, as will be further elucidated in the description of figure 4. Other parts 22b and 22c of power take-off transmission 22 lie outside differential housing 11 and are arranged in a transmission housing 27,28. Figure 3 also shows that spring element 15, as already described in the description of figure 2, is received in floating manner in a passage 16 of differential housing 11.

Figure 4 shows that power take-off transmission 22, which is arranged for the purpose of transmitting a rotation of input shaft 20 to output shaft 21, comprises a transmission gear 36 arranged on input shaft 20, a transmission gear 26 co-acting therewith and arranged on transmission shaft 25, a wet multi-plate clutch 29 and a gearing 30 variable under load. The part 22a of power take-off transmission 22 arranged in differential housing 11, including transmission shaft 25 and transmission gear 26, is situated in the same space 31 as that in which differential 23 is arranged. Liquid lubricants 37, such as differential oil, which are held in differential housing 11 and the uppermost level of which is indicated by means of dot-dash line 37a, and in which differential 23 rotates, are moved through space 31 and thus carried to the part 22a of power take-off transmission 22 arranged in space 31, for instance on the teeth 26a of transmission gear 26, so that these are lubricated and cooled. Differential 23 and the part 22a of power take-off transmission 22 arranged in space 31 can thus be lubricated and cooled by means of liquid lubricants held in differential housing 11. Teeth 26a of transmission gear 26 then transfer the liquid lubricant to teeth 36a of transmission gear 36 located in transmission housing 27. The liquid lubricant can then flow back along the two transmission gears 36, 26 or along the inner wall of transmission housing 27 into differential housing 11. By means of a pump (not shown) arranged in pump space 32 and for instance channels arranged in the differential housing and transmission housing 31, liquid lubricants held in differential housing 11 can be carried out of differential housing 11 to the part 22b of power take-off transmission 22 arranged in transmission housing 28, including the wet multi-plate clutch 29 and the gearing 30 variable under load. Transmission housing 28 is provided with passages 33 (see also figure 2) through which the liquid lubricants pumped to transmission housing 28 can flow back to differential housing 11. The pump (not shown) arranged in pump space 32 can also serve to pump the liquid lubricants held in the differential housing to specific parts of the part of the power take-off transmission arranged in the differential housing.

The gearing 30 variable under load is only shown schematically in figure 4 and for instance comprises a gearing which is based on planetary gearing and with which the rotation speed of output shaft 21 can be changed while the rotation speed of input shaft 20 remains the same without interrupting the driving of the agricultural machine to be driven.

Figure 5 shows a cross-section of front axle assembly 4 of figure 2 at the position of passage 16 in which spring element 15 is received in floating manner, i.e. not connected directly to differential housing 11. As already described in the description of figure 2, spring element 15 is arranged between the lower suspension arms 14a, 14b of suspension arm constructions 12a, 12b. Piston 15b is displaced by pumping air or oil into space 15a of spring element 15 and the coupling points 34a, 34b are pressed apart in the direction of arrow G at the position of lower suspension arms 14a and 14b. Because lower suspension arms 14a, 14b are pivotable about pivot points 35a and 35b, wheel hubs 17a, 17b are then displaced in the direction of arrows H and I. This would mean that the front side 1b of agricultural tractor 1 of figure 1 can be moved upward. A height-adjustable suspension/damping is hereby realized with a single air spring element, wherein spring element 15 is moreover received in protected manner in the passage of differential housing 11.

Although in the exemplary embodiment as shown in the figures the suspension arm constructions comprise suspension arms connected pivotally to the differential housing, the suspension arm constructions can be designed with suspension arms connected rigidly to the differential housing.

Although in the exemplary embodiment as shown in the figures the wheel hubs are connected rotatably to the suspension arm constructions, they can also be formed non-rotatably with the suspension arm constructions.

Although in the exemplary embodiment as shown in the figures a part of the power take-off transmission is arranged in the differential housing and a part of the power take-off transmission is arranged outside the differential housing in a transmission housing, the front axle assembly can also be designed such that the whole power take-off transmission is arranged in the differential housing.

Although in the exemplary embodiment as shown in figure 1 the front axle assembly according to the invention is shown with the relatively small front wheels at the front side of the agricultural tractor and the relatively large rear wheels on the rear side, it is also possible for the relatively large rear wheels, including rear axle, to be arranged on the front side of an agricultural tractor, and for the front axle assembly according to the invention with the relatively small front wheels thereon to be arranged on the rear side. This is particularly the case with an agricultural tractor which carries the main load on the front side and for instance steers with the relatively small wheels on the rear side.

## Claims

1. Front axle assembly (4) for an agricultural tractor (1), comprising
- a differential housing (11) which is configured to be coupled to the chassis (5) of the agricultural tractor (1); and
- two suspension arm constructions (12a, 12b) connected to the differential housing (11) which extend in opposite directions (C, D) and which are configured to each bear a wheel (3) of the agricultural tractor (1) at an end remote from the differential housing (11);
wherein
- a differential (23) is arranged in the differential housing (11) which is configured to be operatively coupled to a drive of the agricultural tractor (1) and to wheels (3) of the agricultural tractor (1) carried by the suspension arm constructions (12a, 12b); and
- the differential housing (11) is configured to hold liquid lubricants (37) with which liquid lubricants (37) the differential (23) is lubricated;
wherein
the front axle assembly (4) also comprises a power take-off device, comprising
- an input shaft (20) which is configured to be operatively coupled to a drive of the agricultural tractor (1);
- an output shaft (21) which is configured to be coupled to an agricultural machine to be driven by the agricultural tractor (1); and
- a power take-off transmission (22) which is configured to transmit a rotation of the input shaft (20) to the output shaft (21);
wherein
- at least a part of the power take-off transmission (22a) is arranged in the differential housing (11) so that the part (22) of the power take-off transmission (22) arranged in the differential housing (11) is lubricated with said liquid lubricants (37) held in the differential housing (11).

2. Front axle assembly as claimed in claim 1,
**characterized in that**
the differential (11) and the part (22a) of the power take-off transmission (22) arranged in the differential housing (11) are arranged in the same space.

3. Front axle assembly as claimed in claim 1 or 2,
**characterized in that**
a part (22b, 22c) of the power take-off transmission lying outside the differential housing (11) is arranged in a transmission housing (27, 28) which is connected to the differential housing (11) such that the part (22b, 22c) of the power take-off transmission (22) arranged in the transmission housing (27, 28) can be lubricated with said liquid lubricants (37) held in the differential housing (11).

4. Front axle assembly as claimed in claim 3,
**characterized in that**
the front axle assembly also comprises a pump for pumping out of the differential housing the liquid lubricants held therein to the part of the power take-off transmission arranged in the transmission housing, wherein passages are provided between the differential housing and the transmission housing through which the liquid lubricants pumped to the transmission, housing can flow back to the differential housing.

5. Front axle assembly (4) as claimed in any of the claims 1-4, **characterized in that**
the front axle assembly (4) also comprises bearing members (19) for bearing the agricultural machine to be driven by means of the power take-off device.

6. Front axle assembly (4) as claimed in claim 5,
**characterized in that**
the differential housing (11) is provided with at least a part of the bearing members (19).

7. Front axle assembly as claimed in claim 5 or 6,
**characterized in that**
the bearing members comprise a lifting device for lifting the agricultural machine to be carried by means of the bearing members.

8. Front axle assembly as claimed in any of the claims 1-7, **characterized in that**
- the suspension arm constructions comprise, suspension arms connected pivotally to the differential housing so that a pivoting movement of the suspension arms is possible relative to the differential housing; and
- the front axle assembly is also provided with a spring device for sprung pivoting movement of the suspension arms relative to the differential housing.

9. Front axle assembly as claimed in claim 8, **characterized in that**
- the spring device comprises a spring member arranged floating between the two suspension arm constructions.

10. Front axle assembly as claimed in claim 9, **characterized in that**
- the differential housing is provided with a passage in which the spring member is received in floating manner.

11. Front axle assembly as claimed in any of the claims 9 and 10, **characterized in that**
- the spring member also comprises a damping for damping the pivoting movement of the suspension arms.

12. Front axle assembly as claimed in any of the claims 9-11, **characterized in that**
- the spring member is provided with a length adjustment with which the length of the spring member is adjustable.

13. Front axle assembly as claimed in any of the claims 1-12, **characterized in that**
- the end of the suspension arm construction which is remote from the differential housing and which can bear a wheel of the agricultural tractor is provided with a wheel hub to which the wheel for carrying can be coupled, wherein the wheel hub is connected rotatably to the end of the suspension arm construction remote from the differential housing.

14. Front axle assembly as claimed in any of the claims 1-13, **characterized in that**
- the power take-off transmission comprises a gearing variable under load.

15. Front axle assembly as claimed in any of the claims 1-14, **characterized in that**
- the power take-off transmission comprises a selectively controllable clutch, preferably a wet multiplate clutch, for selective coupling of the input shaft of the power take-off device and the output shaft of the power take-off device.

16. Agricultural tractor provided with a front axle assembly as claimed in any of the claims 1-15.

## Patentansprüche

1. Vorderachsenanordnung (4) für einen landwirtschaftlichen Traktor (1), umfassend
- ein Differentialgehäuse (11), das konfiguriert ist, mit dem Chassis (5) des landwirtschaftlichen Traktors (1) gekoppelt zu werden; und
- zwei Federungsarmkonstruktionen (12a, 12b), die mit dem Differentialgehäuse (11) verbunden sind, die sich in entgegen gesetzte Richtungen (C, D) erstrecken und die so konfiguriert sind, dass jede ein Rad (3) des landwirtschaftlichen Traktors (1) an einem Ende trägt, das entfernt von dem Differentialgehäuse (11) ist;
wobei
- ein Differential (23) in dem Differentialgehäuse (11) angeordnet ist, das so konfiguriert ist, dass es im Betrieb mit einem Antrieb des landwirtschaftlichen Traktors (1) und mit Rädern (3) des landwirtschaftlichen Traktors (1) gekoppelt ist, die durch die Federungsarmkonstruktionen (12a, 12b) getragen werden; und
- das Differentialgehäuse (11) konfiguriert ist, flüssige Schmiermittel (37) zu enthalten, wobei mit den flüssigen Schmiermitteln (37) das Differential (23) geschmiert wird;
wobei
die Frontachsenanordnung (4) auch eine Abtriebsvorrichtung umfasst, umfassend
- einen Eingangsschaft (20), der konfiguriert ist, im Betrieb mit einem Antrieb des landwirtschaftlichen Traktors (1) gekoppelt zu werden,
- einen Ausgangsschaft (21), der konfiguriert, mit einer landwirtschaftlichen Maschine gekoppelt zu werden, die durch den landwirtschaftlichen Traktor (1) angetrieben werden soll; und
- eine Abtriebsübertragung (22), die zum Übertragen einer Rotation des Eingangsschafts (20) zu dem Ausgangsschaft (21) konfiguriert ist;
wobei
- wenigstens ein Teil der Abtriebsübertragung (22a) in dem Differentialgehäuse (11) angeordnet ist, so dass der Teil (22) der Abtriebsübertragung (22), der in dem Differentialgehäuse (11) angeordnet ist, mit den flüssigen Schmiermitteln (37) geschmiert wird, die in dem Differentialgehäuse (11) enthalten sind.

2. Vorderachsenanordnung nach Anspruch 1, **dadurch gekennzeichnet, dass**
das Differential (11) und der Teil (22a) der Abtriebsübertragung (22), der in dem Differentialgehäuse (11) angeordnet ist, in dem gleichen Raum angeordnet sind.

3. Vorderachsenanordnung nach einem der Ansprüche 1 oder 2, **dadurch gekennzeichnet, dass**
ein Teil (22b, 22c) der Abtriebsübertragung, die außerhalb des Differentialgehäuses (11) liegt, in einem Übertragungsgehäuse (27, 28) angeordnet ist, das mit dem Differentialgehäuse (11) verbunden ist, so dass der Teil (22b, 22c) der Abtriebsübertragung (22), der in dem Übertragungsgehäuse (27, 28) angeordnet ist, mit den flüssigen Schmiermitteln (37) geschmiert werden kann, die in dem Differentialgehäuse (11) enthalten sind.

4. Vorderachsenanordnung nach Anspruch 3, **dadurch gekennzeichnet, dass**
die Vorderachsenanordnung auch eine Pumpe zum Herauspumpen der flüssigen Schmiermittel aus dem Differentialgehäuse umfasst, die darin enthalten sind, zu dem Teil der Abtriebsübertragung, der in dem Übertragungsgehäuse angeordnet ist, wobei Durchlässe zwischen dem Differentialgehäuse und dem Übertragungsgehäuse vorgesehen sind, durch welche die flüssigen Schmiermittel, die zu dem Übertragungsgehäuse gepumpt werden, zurück zu dem Differentialgehäuse fließen können.

5. Vorderachsenanordnung (4) nach einem der Ansprüche 1 bis 4, **dadurch gekennzeichnet, dass**
die Vorderachsenanordnung (4) auch Lagerelemente (19) zum Tragen der landwirtschaftlichen Maschine umfasst, die durch die Abtriebsvorrichtung angetrieben werden soll.

6. Vorderachsenanordnung (4) nach Anspruch 5, **dadurch gekennzeichnet, dass**
das Differentialgehäuse (11) mit wenigstens einem Teil der Lagerelemente (19) ausgestattet ist.

7. Vorderachsenanordnung nach einem der Ansprüche 5 oder 6, **dadurch gekennzeichnet, dass**
die Lagerelemente eine Hebevorrichtung zum Heben der landwirtschaftlichen Maschine umfassen, die durch die Lagerelemente getragen werden soll.

8. Vorderachsenanordnung nach einem der Ansprüche 1 bis 7, **dadurch gekennzeichnet, dass**
- die Federungsarmkonstruktionen Federungsarme umfassen, die drehbar mit dem Differentialgehäuse verbunden sind, so dass eine Drehbewegung der Federungsarme bezüglich des Differentialgehäuses möglich ist; und
- die Vorderachsenanordnung auch mit einer Federvorrichtung für eine gefederte Drehbewegung der Federungsarme bezüglich des Differentialgehäuses ausgestattet ist.

9. Vorderachsenanordnung nach Anspruch 8, **dadurch gekennzeichnet, dass**
- die Federvorrichtung ein Federelement umfasst, das beweglich zwischen den zwei Federungsarmkonstruktionen angeordnet ist.

10. Vorderachsenanordnung nach Anspruch 9, **dadurch gekennzeichnet, dass**
- das Differentialgehäuse mit einem Durchlass ausgestattet ist, in dem das Federelement in beweglicher Weise aufgenommen ist.

11. Vorderachsenanordnung nach einem der Ansprüche 9 und 10, **dadurch gekennzeichnet, dass**
- das Federelement auch eine Dämpfung zum Dämpfen der Drehbewegung der Federungsarme umfasst.

12. Vorderachsenanordnung nach einem der Ansprüche 9 bis 11, **dadurch gekennzeichnet, dass**
- das Federelement mit einer Längeneinstellung ausgestattet ist, mit der die Länge des Federelements einstellbar ist.

13. Vorderachsenanordnung nach einem der Ansprüche 1 bis 12, **dadurch gekennzeichnet, dass**
- das Ende der Federungsarmkonstruktion, die entfernt von dem Differentialgehäuse ist und die ein Rad des landwirtschaftlichen Traktors tragen kann, mit einer Radnabe ausgestattet ist, mit der das Rad zum Tragen gekoppelt werden kann, wobei die Radnabe drehbar mit dem Ende der Federungsarmkonstruktion verbunden ist, die von dem Differentialgehäuse entfernt ist.

14. Vorderachsenanordnung nach einem der Ansprüche 1 bis 13, **dadurch gekennzeichnet, dass**
- die Abtriebsübertragung ein Getriebe umfasst, das unter Last variierbar ist.

15. Vorderachsenanordnung nach einem der Ansprüche 1 bis 14, **dadurch gekennzeichnet, dass**
- die Abtriebsübertragung eine wahlweise einstellbare Kupplung umfasst, vorzugsweise eine Feucht-Mehrplatten-Kupplung, zum wahlweisen Kuppeln des Eingangsschafts der Abtriebsvorrichtung und des Ausgangsschafts der Abtriebsvorrichtung.

16. Landwirtschaftlicher Traktor, der mit einer Vorderachsenanordnung nach einem der Ansprüche 1 bis 15 ausgestattet ist.

## Revendications

1. Ensemble d'essieu avant (4) d'un tracteur agricole (1) comprenant :
- un logement de différentiel (11) configuré pour être couplé au châssis (5) du tracteur agricole (1) ; et
- deux constructions de bras de suspension (12a, 12b) connectées au logement de différentiel (11) qui s'étendent dans des directions opposées (C, D) et qui sont configurées pour supporter chacune une roue (3) du tracteur agricole (1) au niveau d'une extrémité éloignée du logement de différentiel (11) ;
dans lequel :
- un différentiel (23) est agencé dans le logement de différentiel (11) qui est configuré pour être couplé de manière opérationnelle à une transmission du tracteur agricole (1) et aux roues (3) du tracteur agricole (1) supportées par les constructions de bras de suspension (12a, 12b) ; et
- le logement de différentiel (11) est configuré pour contenir des lubrifiants liquides (37), lubrifiants liquides (37) grâce auxquels le différentiel (23) est lubrifié ;
dans lequel :
l'ensemble d'essieu avant (4) comprend également un dispositif de prise de force, qui comporte :
- un arbre d'entrée (20) configuré pour être couplé de manière opérationnelle à une transmission du tracteur agricole (1) ;
- un arbre de sortie (21) configuré pour être couplé à une machine agricole qu'entraîne le tracteur agricole (1) ; et
- une transmission de prise de force (22) configurée pour transmettre une rotation de l'arbre d'entrée (20) à l'arbre de sortie (21) ;
dans lequel :
- une partie (22a) au moins de la transmission de prise de force est agencée dans le logement de différentiel (11) de telle sorte que la partie (22) de la transmission de prise de force (22) agencée dans le logement de différentiel (11) soit lubrifiée par lesdits lubrifiants liquides (37) contenus dans le logement de différentiel (11).

2. Ensemble d'essieu avant selon la revendication 1, **caractérisé en ce que** :
le différentiel (11) et la partie (22a) de la transmission de prise de force (22) agencés dans le logement de différentiel (11) sont agencés dans le même espace.

3. Ensemble d'essieu avant selon la revendication 1 ou 2, **caractérisé en ce que** :
une partie (22b, 22c) de la transmission de prise de force qui se trouve en dehors du logement de différentiel (11) est agencée dans un logement de transmission (27, 28) connecté au logement de différentiel (11), de telle sorte que la partie (22b, 22c) de la transmission de prise de force (22) agencée dans le logement de transmission (27, 28) puisse être lubrifiée par lesdits lubrifiants liquides (37) contenus dans le logement de différentiel (11).

4. Ensemble d'essieu avant selon la revendication 3, **caractérisé en ce que** :
l'ensemble d'essieu avant comprend également une pompe destinée à pomper hors du logement de différentiel les lubrifiants liquides contenus à l'intérieur vers la partie de la transmission de prise de force agencée dans le logement de transmission, dans lequel des passages sont disposés entre le logement de différentiel et le logement de transmission, passages à travers lesquels les lubrifiants liquides pompés vers le logement de transmission peuvent circuler et revenir vers le logement de différentiel.

5. Ensemble d'essieu avant (4) selon l'une quelconque des revendications 1 à 4, **caractérisé en ce que** :
l'ensemble d'essieu avant (4) comprend également des éléments de support (19) destinés à supporter la machine agricole à entraîner à l'aide du dispositif de prise de force.

6. Ensemble d'essieu avant (4) selon la revendication 5, **caractérisé en ce que** :
le logement de différentiel (11) est doté d'une partie au moins des éléments de support (19).

7. Ensemble d'essieu avant selon la revendication 5 ou 6, **caractérisé en ce que** :
les éléments de support comprennent un dispositif de levage destiné à soulever la machine agricole que supportent les éléments de support.

8. Ensemble d'essieu avant selon l'une quelconque des revendications 1 à 7, **caractérisé en ce que** :
- les constructions de bras de suspension comprennent des bras de suspension connectés en pivotement au logement de différentiel de telle sorte qu'un déplacement en pivotement des bras de suspension soit possible par rapport au logement de différentiel ; et
- l'ensemble d'essieu avant est également doté d'un dispositif à ressort destiné à un déplacement en pivotement aidé par ressort des bras de suspension par rapport au logement de différentiel.

9. Ensemble d'essieu avant selon la revendication 8, **caractérisé en ce que** :
- le dispositif à ressort comprend un élément de ressort disposé flottant entre les deux constructions de bras de suspension.

10. Ensemble d'essieu avant selon la revendication 9, **caractérisé en ce que** :
- le logement de différentiel est doté d'un passage dans lequel l'élément de ressort est reçu d'une façon flottante.

11. Ensemble d'essieu avant selon la revendication 9 et 10, **caractérisé en ce que** :
- l'élément de ressort comprend également un dispositif d'amortissement destiné à amortir le déplacement en pivotement des bras de suspension.

12. Ensemble d'essieu avant selon l'une quelconque des revendications 9 à 11, **caractérisé en ce que** :
- l'élément de ressort est doté d'un dispositif de réglage de longueur grâce auquel il est possible de régler la longueur de l'élément de ressort.

13. Ensemble d'essieu avant selon l'une quelconque des revendications 1 à 12, **caractérisé en ce que** :
- l'extrémité de la construction de bras de suspension éloignée du logement de différentiel et pouvant supporter une roue du tracteur agricole, est dotée d'un moyeu de roue auquel la roue peut être couplée et qui est destiné à supporter celle-ci, lequel moyeu de roue est connecté en rotation à l'extrémité de la construction de bras de suspension éloignée du logement de différentiel.

14. Ensemble d'essieu avant selon l'une quelconque des revendications 1 à 13, **caractérisé en ce que** :
- la transmission de prise de force comprend un engrenage qui varie en fonction de la charge.

15. Ensemble d'essieu avant selon l'une quelconque des revendications 1 à 14, **caractérisé en ce que** :
- la transmission de prise de force comprend un embrayage pouvant être commandé de manière sélective, de préférence un embrayage multidisque humide, destiné à un accouplement sélectif de l'arbre d'entrée du dispositif de prise de force et de l'arbre de sortie du dispositif de prise de force.

16. Tracteur agricole doté d'un ensemble d'essieu avant selon l'une quelconque des revendications 1 à 15.
